Europäisches Patentamt

European Patent Office

Office européen des brevets

(11) Numéro de publication: **0 266 634 B1**

# FASCICULE DE BREVET EUROPEEN

(45) Date de publication de fascicule du brevet: **25.03.92**  (51) Int. Cl.⁵: **H01B 7/32**, G01K 11/04

(21) Numéro de dépôt: **87115419.1**

(22) Date de dépôt: **21.10.87**

(54) **Dispositif de mesure de la température d'un point chaud sur un câble de transmission d'énergie.**

(30) Priorité: **24.10.86 FR 8614796**

(43) Date de publication de la demande:
**11.05.88 Bulletin 88/19**

(45) Mention de la délivrance du brevet:
**25.03.92 Bulletin 92/13**

(84) Etats contractants désignés:
**BE CH DE ES FR GB IT LI NL SE**

(56) Documents cités:
**US-A- 3 187 080**
**US-A- 3 510 762**

**ELECTRICAL REVIEW, vol. 199, no. 15, 15 octobre 1976, page 48, IPC Electrical-Electronic Press Ltd., Londres, GB; "New capsule measures transformer hot spots"**

**IEEE TRANSACTIONS ON POWER APPARATUS AND SYSTEMS, vol. PAS-80, no. 7, septembre-octobre 1970, pages 1429-1433, New York, US; J. KORTSCHINSKI et al.: "A power-cable temperature monitoring system"**

(73) Titulaire: **ALCATEL CABLE**
**30, rue des Chasses**
**F-92111 Clichy Cédex(FR)**

(72) Inventeur: **Thevenon, Henri**
**288 rue André Philip**
**F-69003 Lyon(FR)**

(74) Mandataire: **Weinmiller, Jürgen et al**
**Lennéstrasse 9 Postfach 24**
**W-8133 Feldafing(DE)**

## Description

La présente invention concerne un dispositif de mesure de la température d'un point chaud sur un câble de transmission d'énergie, lorsqu'elle dépasse une température limite fixée, comprenant un tube contenant un liquide vaporisable au voisinage de cette température limite et disposé dans le câble de transmission d'énergie ou au contact de son pourtour, et des moyens pour détecter l'augmentation de la tension de vapeur de ce liquide.

On a déjà envisagé d'effectuer cette détection à l'aide de thermocouples. Toutefois, les zones trop chaudes dans les câbles de transmission d'énergie ne dépassent pas en général quelques mètres de longueur, ce qui imposerait de répartir sur toute la longueur du câble un grand nombre de thermocouples.

On a proposé dans le document US-A-3510762 de disposer le long d'un câble d'énergie un câble auxiliaire comprenant un conduit rempli d'un liquide vaporisable au voisinage de la température maximale admissible pour le câble d'énergie, et dont la constante diélectrique de sa vapeur soit notablement différente de celle du liquide, et un câble haute fréquence permettant de détecter les points où le liquide s'est vaporisé par échométrie d'impulsions électriques. Un tel dispositif est cependant trop coûteux pour un emploi courant, et ne donne que la température d'ébullition.

On a aussi proposé dans le document US-A-3187080 un dispositif de détection de la température dans différentes sections d'un câble électrique, comprenant un tube rempli d'un liquide vaporisable au voisinage de la température maximale admissible pour la câble, et à chaque jonction de ce dernier une chambre reliée à ce tube, partiellement remplie de ce même liquide vaporisable, et munie d'un contacteur manométrique. Sous l'effet de la vaporisation partielle du liquide dans le tube, le niveau du liquide s'élève dans la chambre, et un flotteur vient actionner le contacteur et court-circuiter une paire de conducteurs téléphoniques incorporée au câble et commander une signalisation de la zone du câble où s'est produit un échauffement anormal. Un tel dispositif ne permet pas de détecter avec précision la zone où s'est produit l'échauffement excessif, d'autant plus que ses indications sont perturbées par les variations de température du reste du câble, en-dehors de la zone d'échauffement excessif. En outre, le dispositif du document ci-dessus, comme celui du précédent, indique que la température de vaporisation est atteinte par détection d'une variation de volume, du fait d'une vaporisation du liquide à pression constante.

La présente invention a pour but de procurer un dispositif de mesure continue de la température d'un point chaud sur un câble de transmission d'énergie, qui présente une meilleure précision et dont les indications soient plus fiables que celles des dispositifs connus.

Le dispositif selon l'invention est caractérisé en ce que le tube contenant un liquide vaporisable est relié à l'une de ses extrémités à des moyens de détection d'une élévation de la pression exercée par le liquide à cette extrémité.

De préférence, il comporte un deuxième tube identique au premier et rempli du même liquide, disposé à proximité du premier tube et parallèle à celui-ci, les extrémités des deux tubes sont reliées à des cylindres munis de pistons mobiles dont les mouvements sont rendus égaux et de sens contraires par une bielle, l'extrémité du premier tube est reliée en outre à une chambre de faible volume ajustable et à un manomètre, le piston relié à l'extrémité du deuxième tube est sollicité en sens contraire à la pression exercée par le fluide contenu dans ce tube par un vérin créant une surpression telle que ce deuxième tube ne contienne que du liquide, et la différence des pressions entre le deuxième tube et le premier est rendue constante par un servo-mécanisme. On augmente ainsi sa sensibilité.

Dans ce cas, il comporte avantageusement en outre l'une des caractéristiques suivantes :

- Il comprend de plus des moyens de mesure de l'angle de rotation de la bielle reliant les pistons autour de son axe, fonction de la température moyenne dans le premier tube.
- La chambre de faible volume ajustable est délimitée par une cloison mobile de position réglable par une vis micrométrique.

Il est décrit ci-après, à titre d'exemple et en référence aux figures du dessin annexé, le principe de base et la structure d'un dispositif selon l'invention.

La figure 1 représente la température atteinte par un liquide vaporisable le long d'un élément de câble.

La figure 2 représente les diagrammes de la pression et des masses spécifiques du liquide et de la vapeur d'un tel liquide en fonction de la température.

La figure 3 représente un dispositif selon l'invention.

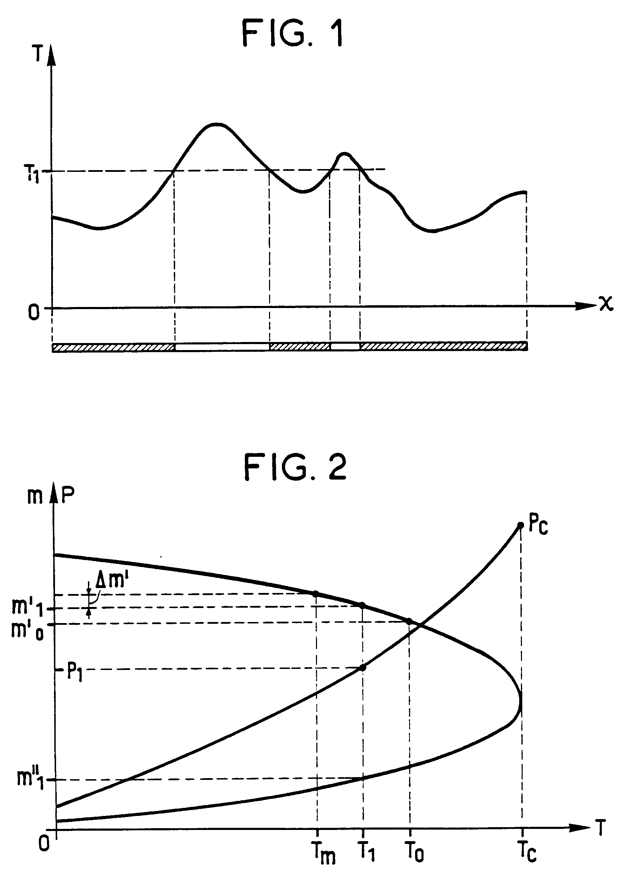

La figure 1 représente l'évolution de la température T en fonction de l'abscisse x dans un tube de contrôle rempli de liquide vaporisable à une température $T_1$ disposé dans un câble. Les éléments du tube au-dessous de la temperature de vaporisation du liquide ont été représentés hachurés, ceux au-dessus de cette température de vaporisation en blanc. La pression à l'extrémité du tube est égale à la tension de vapeur du liquide à la limite entre une zone de liquide et une zone de vapeur.

Toutefois, une détection de points chauds d'un câble par simple mesure de la pression à l'extrémité du tube ne présente pas une bonne précision en longueur.

On supposera que le tube est rempli à l'origine de liquide à la température To, au moins égale à la température maximale admissible dans le câble. En se reportant à la figure 2, si le manomètre disposé à l'extrémité du tube indique une pression $P_1$ correspondant à une température $T_1$, la longueur x de la zone chaude détectée, rapportée à la longueur totale du tube 1, sera (en désignant respectivement par m' et m" les masses spécifiques en phase vapeur et en phase liquide).

$$\frac{x}{l} = \frac{m'_1 + \triangle m' - m'_o}{m'_1 + \triangle m' - m"_1}$$

$(m'_1 + \Delta m')$ désignant la masse spécifique de la vapeur à la température moyenne $T_m$ du liquide.
et $T_c$ et $P_c$ désignant la température et la pression critiques.

On observera que la longueur de la zone gazeuse chaude diminue lorsque la température $T_1$ se rapproche de $T_0$.

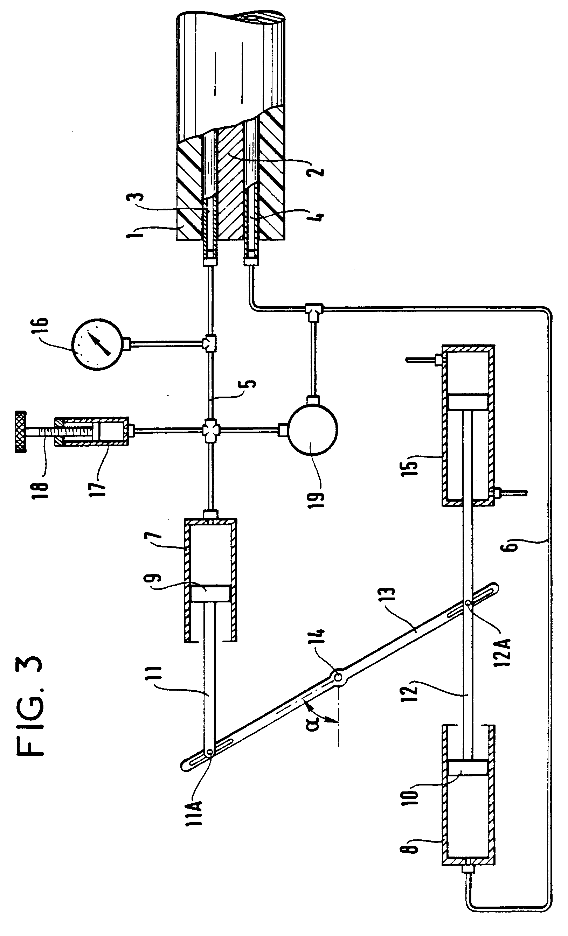

Le montage différentiel décrit en référence à la figure 3 permet de réduire la longueur de la zone chaude détectable.

La câble de transmission d'énergie 1 comporte à proximité de son conducteur 2 deux tubes 3, 4 remplis tous deux d'un liquide vaporisable au voisinage de la température maximale admissible dans le câble à leur emplacement, celle-ci pouvant être inférieure à celle du conducteur proprement dit, compte tenu de la position des tubes 3, 4 dans l'isolation du câble. On peut utiliser par exemple comme liquide le tétrachlorure de carbone ou le monochloréthane. Les tubes 3, 4 sont reliés par des conduits 5, 6 à des cylindres 7, 8 dans lesquels coulissent des pistons 9, 10. Ces pistons sont reliés par leurs tiges 11, 12 par l'intermédiaire d'articulations 11A, 12A à une bielle 13 pouvant pivoter autour de son axe médian 14. L'extrémité de la tige 12 du piston 10 est reliée en outre à la tige d'un vérin 15, exerçant une pression équilibrant la somme des pressions exercées sur les pistons 9 et 10 par les liquides des tubes 3 et 4, et suffisante pour que le fluide contenu dans le tube 4 reste totalement à l'état liquide.

Le conduit 5 est relié par ailleurs à un manomètre 16 et à une chambre de faible volume 17, ce dernier étant réglable par une vis micrométrique 18. Les conduits 5 et 6 sont enfin reliés à un servo-mécanisme 19, électrique, hydraulique ou pneumatique, qui maintient constante la différence de pression entre eux à une valeur de quelques bars.

Le fonctionnement du dispositif est le suivant.

Les deux tubes étant également remplis de liquide vaporisable à la température maximale admissible, on crée une bulle de vapeur d'un volume déterminé en communication avec le tube de mesure proprement dit 3 en manoeuvrant la vis micrométrique 18. Le vérin 15 exerce une pression équivalente p égale à la somme des pressions $p_1$ s'exerçant sur le piston 9 et $p_2$ sur le piston 10. La pression exercée par le vérin 15 étant constante, toute augmentation de la pression $p_1$ entraîne une diminution de la pression $p_2$, et inversement. Le maintien de la différence $p_2$-$p_1$ à une valeur constante par le servo-mécanisme 19 permet d'assurer la compensation des effets d'élasticité, notamment de compressibilité des liquides des deux tubes, qui en son absence s'ajouteraient.

La manomètre 16 indique alors la tension de vapeur du point chaud du câble, la relation tension de vapeur-température du fluide utilisé étant connue.

Par ailleurs, l'angle de rotation $\alpha$- de la bielle reliant les extrémités des pistons est fonction de la température moyenne du tube 3, et permet donc de déterminer celle-ci.

Les tubes 3 et 4 assurant la mesure seront de préférence disposés dans les conducteurs. On peut aussi pour faciliter leur implantation les placer dans le bourrage de câbles triphasés, ou même simplement en contact avec la surface extérieure du câble. Dans ces cas, il faudra déterminer la température du conducteur en ajoutant la différence de température entre le conducteur et la zone du câble où sont disposés les tubes, ou bien entre le conducteur et la surface du câble, donnée par une image thermique du câble.

On disposera l'appareillage de mesure à l'une des extrémités du câble, ou aux deux extrémités. Si l'on veut plus de sensibilité, on peut en disposer un à chaque jonction du câble.

**Revendications**

1. Dispositif de mesure de la température d'un point chaud sur un câble de transmission d'énergie (1), lorsqu'elle dépasse une température limite fixée, comprenant un tube (3) contenant un liquide vaporisable au voisinage de cette température limite et disposé dans le câble de transmission d'énergie ou au contact de son pourtour, et des moyens pour détecter la vaporisation de ce liquide en au moins un point de ce tube, caractérisé en ce que ce tube est relié à l'une de ses extrémités à des moyens de détection d'une élévation de la pression exercée par le liquide à cette extrémité.

**2.** Dispositif selon la revendication 1, caractérisé en ce qu'il comporte un deuxième tube identique au premier et remplie du même liquide, disposé à proximité du premier tube et parallèle à celui-ci, en ce que les extrémités des deux tubes sont reliées à des cylindres (7, 8) munis de pistons mobiles (9, 10) dont les mouvements sont rendus égaux et de sens contraires par une bielle (13), en ce que l'extrémité du premier tube est reliée en outre à une chambre (17) de faible volume ajustable et à un manomètre (16), en ce que le piston relié à l'extrémité du deuxième tube est sollicité en sens contraire à la pression exercée par le fluide contenu dans ce tube par un vérin (15) créant une surpression telle que ce deuxième tube ne contienne que du liquide, et en ce que la différence des pressions entre le deuxième tube et le premier est rendue constante par un servo-mécanisme (19).

**3.** Dispositif selon la revendication 2, caractérisé en ce qu'il comprend en outre des moyens de mesure de l'angle de rotation de la bielle (13) reliant les pistons autour de son axe (14), fonction de la température moyenne dans le premier tube.

**4.** Dispositif selon les revendications 2 ou 3, caractérisé en ce que la chambre de faible volume ajustable (17) est délimitée par une cloison mobile de position réglable par une vis micrométrique (18).

**Claims**

**1.** Apparatus for measuring temperature at a hot point along an energy transmission cable (1) when the temperature exceeds a fixed limit temperature, the apparatus comprising a tube (3) containing a liquid which is vaporizable in the vicinity of said limit temperature and which is disposed in the energy transmission cable or in contact with its periphery, together with means for detecting an increase in the vapor pressure of said liquid at at least one point along said tube, the apparatus being characterized in that said tube is connected at one of its ends to means for detecting an increase in the pressure exerted by the liquid at said end.

**2.** Apparatus according to claim 1, characterized in that it includes a second tube identical to the first and filled with the same liquid, said second tube disposed in the proximity of the first tube and parallel thereto, in that the ends of both tubes are connected to cylinders (7, 8) fitted with moving pistons (9, 10) whose movements are rendered equal and opposite by a lever (13), in that the end of the first tube is also connected to a pressure gauge (16) and to a chamber (17) of adjustable small volume, in that the piston connected to the end of the second tube is urged against the pressure exerted by the fluid contained in said tube by an actuator (15) which sets up excess pressure such that said second tube contains liquid only, and in that the pressure difference between the first and second tubes is kept constant by a servomechanism (19).

**3.** Apparatus according to claim 2, characterized in that it further includes means for measuring the angle of rotation of the piston-interconnecting lever (13) about its own axis (14), which angle is a function of the average temperature in the first tube.

**4.** Apparatus according to claim 2 or 3, characterized in that the chamber (17) of adjustable small volume is delimited by a moving partition whose position is adjustable by a micrometer screw (18).

**Patentansprüche**

**1.** Vorrichtung zum Messen der Temperatur einer heißen Stelle eines Energieübertragungskabels (1), wenn die Temperatur eine festgesetzte Grenztemperatur überschreitet, wobei die Vorrichtung ein Rohr (3) aufweist, das mit einer Flüssigkeit gefüllt ist, die in der Nähe der Grenztemperatur verdampft, und das im Energieübertragungskabel oder in Berührung mit seinem Umfang angeordnet ist, und wobei die Vorrichtung Mittel zur Erfassung der Verdampfung der Flüssigkeit an mindestens einem Punkt des Rohres aufweist, dadurch gekennzeichnet, daß das Rohr mit einem seiner Enden an Mittel zur Erfassung einer Steigerung des von der Flüssigkeit an diesem Ende ausgeübten Drucks angeschlossen ist.

**2.** Vorrichtung nach Anspruch 1, dadurch gekennzeichnet, daß sie ein zweites Rohr aufweist, das dem ersten gleicht, mit der gleichen Flüssigkeit gefüllt ist und in der Nähe des ersten Rohrs parallel dazu angeordnet ist, daß die Enden der beiden Rohre an Zylinder (78) mit beweglichen Kolben (9, 10) angeschlossen sind, deren Bewegungen durch eine Gelenkstange (13) einander gleich und gegenläufig gemacht werden, daß das Ende des ersten Rohrs weiter an eine Kammer (17) mit einem kleinen einstellbaren Volumen sowie an ein Manometer (16) angeschlossen ist, daß der mit dem Ende des zweiten Rohrs verbundene Kolben durch einen Pneumatikzylinder (15) in Gegenrichtung zu dem vom Fluid im Rohr ausgeübten Druck belastet wird, wobei er einen solchen Überdruck erzeugt, daß das zweite Rohr nur Flüssigkeit enthält, und daß der Unterschied der Drücke zwischen dem zweiten Rohr und dem ersten durch ein Servogerät (19) konstant gehalten wird.

3. Vorrichtung nach Anspruch 2, dadurch gekennzeichnet, daß sie weiter Mittel zum Messen des Drehwinkels der die Kolben verbindenden Gelenkstange (13) um ihre Achse (14) aufweist, wobei dieser Winkel von der mittleren Temperatur im ersten Rohr abhängt.

4. Vorrichtung nach Anspruch 2 oder 3, dadurch gekennzeichnet, daß die Kammer (17) mit kleinem einstellbarem Volumen durch eine bewegliche Zwischenwand begrenzt ist, die durch eine Mikrometerschraube (18) regelbar ist.

# FIG. 1

# FIG. 2

FIG. 3